# FASCICULE DE BREVET EUROPEEN

(11) **EP 1 800 254 B1**
(45) Date de publication et mention de la délivrance du brevet: **01.01.2014**
(21) Numéro de dépôt: 05789607.8
(22) Date de dépôt: 28.09.2005
(51) Int. Cl.: G06K 19/14, G07D 7/20

(54) **PROCEDE DE SECURISATION D'UN OBJET PORTATIF PERSONNEL**
VERFAHREN ZUM SICHERMACHEN EINES PERSÖNLICHEN TRAGBAREN OBJEKTS
METHOD FOR MAKING SECURE A PERSONAL PORTABLE OBJECT

(30) Priorité: 01.10.2004 EP 04292348
(43) Date de publication de la demande: 27.06.2007
(73) Titulaire: Gemalto SA, 92190 Meudon (FR)
(72) Inventeur: LAUNAY, Nathalie, 6 Rue de la Verrerie 92190 Meudon (FR); PERION, Fabrice, 6 Rue de la Verrerie, 92190 Meudon (FR); LEIBENGUTH, Joseph, Rue de la Verrerie 92190 Meudon (FR); ROS, Frederic, 6 rue de la Verrerie 92197 Meudon Cedex (FR)
(74) Mandataire: Fragnaud, Aude
(86) Numéro de dépôt international: PCT/IB2005/002888
(87) Numéro de publication internationale: WO 2006/038075

(56) Documents cités:
- EP-A- 0 334 616
- DE-A1- 10 037 176
- US-A1- 2003 210 802

## Description

L'invention concerne un procédé de sécurisation d'un objet portatif personnel comportant un corps d'objet, une puce électronique, une impression d'image ainsi que des moyens pour permettre une communication dudit objet avec le monde extérieur. Elle concerne plus particulièrement des cartes à puce.

Les cartes à puce sont des objets normalisés comportant un corps de carte, une puce et une interface de communication avec le monde extérieur.

Le corps de carte comporte des données qui peuvent être fixes, c'est-à-dire qui ne dépendent pas de leur titulaire, ou alors, variables. Ces données sont bien souvent imprimées sur le corps de carte. Il s'agit par exemple d'un numéro de carte. De même, la puce comporte différents types de données enregistrées dans sa mémoire.

L'interface de communication entre la carte et le monde extérieur est formée par des contacts affleurants du corps de carte ou d'une antenne noyée dans ledit corps. Selon les moyens de communication dont elle dispose, la carte est dite à contacts, sans contact, hybride ou dual interface (interface double).

Il existe différentes techniques permettant de sécuriser les cartes à puce.

Certaines techniques proposent l'adjonction d'un élément de sécurité physique au corps d'objet.

Il s'agit notamment d'une technique dans laquelle l'élément de sécurité physique est un nano code-barres apte à générer une réponse sécurisée, notamment un signal magnétique, qui est intégré dans la carte.

Il s'agit par ailleurs d'une technique particulière dans laquelle l'élément de sécurité est relié à un autre élément de l'objet portatif. Cette technique a été développée par la Société NOVATEC™ et l'élément de sécurité est appelé PROOFTAG™. Elle repose sur la génération de bulles aléatoires. Pour la vérification du PROOFTAG™, une base de données est interrogée et une vérification est effectuée avec des données enregistrées sur la piste magnétique de la carte, ou alors, avec des données imprimées sur son corps.

Des solutions de sécurisation émergentes visent à comparer de manières sécurisée des éléments d'informations stockées dans la puce avec des informations stockées de manière cachée sur le corps de cartes ou introduites à l'aide d'un périphérique extérieur capable d'extraire de l'information biométrique du porteur de la carte. Un exemple de ce type d'innovation KINEGRAM est proposé par le groupe KURZ (Keesing's Journal of Documents, issue 7, 2004) qui compare des informations sécurisées de l'OVD (Optically Variable Device) à des informations encryptées dans la puce.
Toutefois, il semble que parmi toutes les solutions innovantes, les techniques qui consistent à insérer une donnée cachée dans l'impression dites de digital watermarking (tatouage numérique) semblent être les techniques les mieux adaptées et en vue pour la sécurisation des supports physiques intégrant une puce électronique et une image type photo d'identité car, entre autre, elles ont pour avantage de ne pas nécessiter l'ajout d'éléments physiques « readable » (lisibles) particuliers dans et/ou sur le corps de carte. Il s'agit des techniques commercialisées sous les appellations CRYPTOGLYPHE™, le SCRAMBLED INDICIA™, l'IPI™ ou l'ICI™.

Le watermarking s'apparente à la stéganographie.

La stéganographie consiste à dissimuler un message, que l'on désire transmettre confidentiellement, dans un ensemble de données d'apparence anodine, de façon que sa présence soit imperceptible. Comme dans le cas de la cryptographie, la stéganographie permet d'échanger des messages avec un correspondant sans que d'autres personnes puissent en prendre connaissance. Mais alors qu'avec la cryptographie habituelle, la sécurité repose sur le fait que le message ne sera sans doute pas compris, avec la stéganographie, la sécurité repose sur le fait que le message ne sera sans doute pas détecté.

La watermarking se distingue essentiellement de la stéganographie par sa destination. Au lieu de permettre l'échange d'un message entre correspondants, le watermarking est destiné à sécuriser un support, notamment un support image, son ou vidéo, par insertion astucieuse d'une marque permanente dans ledit support, sans dégradation apparente de celui-ci (assimilable à du bruit dans le jargon du traitement du signal).

Le digital watermarking est appliqué à des images numériques. Il a connu un essor considérable ces dernières années. Cela est dû essentiellement au besoin grandissant de protéger le transfert des images sur internet. Cette technique consiste à insérer une marque sur des images numériques. Cette marque est imperceptible à l'oeil humain mais lisible par un système de reconnaissance dédié. Ce système de reconnaissance permet d'assurer la nativité de l'image protégée.

Le contenu d'une marque est typiquement de quelques dizaines de bits maximum d'information. Elle peut contenir des informations sur les permissions attachées au document, ou alors, une indication sur la personne propriétaire du document. Ainsi, toute personne qui se réclamera illégalement propriétaire du document pourra être découverte.

Les conditions d'un bon digital watermarking pour les supports carte à puce munis d'une image sont les suivantes.

Il est tout d'abord nécessaire que la marque présente une excellente résistance à l'impression et puisse être lue avec une grande facilité.

En pratique, la marque est l'objet de détériorations (tramage impression, conversion analogique numérique) qui se traduisent par l'ajout de bruit, de légères déformations géométriques, et d'un changement d'échelle engendré par la chaîne d'acquisition. Ces détériorations ne facilitent pas une synchronisation de l'image (recherche des repères de l'image). La lecture de la marque doit, malgré ces détériorations, être effectuée à partir d'une capture analogique de la photo d'identité préalablement imprimée, par exemple au moyen d'un scanneur, d'un caméscope numérique, d'une caméra de type Webcam ou d'un appareil photo numérique.

De plus, la carte et la photographie vieillissent et, en quelque sorte, subissent des détériorations à la fois d'ordre « mécanique » et « colorimétrique » se traduisant par exemple par le fanage des couleurs, la présence de saletés ou de rayures et aussi des petites géométriques liées à l'utilisation fréquente et non protégée des corps de carte. Or, l'interprétation de la marque doit pouvoir se faire même si l'image de la photo d'identité a subit ce genre d'attaques.

Si les techniques de digital watermarking s'avèrent être des plus prometteuses pour les applications de type sécurisation de corps de cartes à puces, les études menées selon l'état de l'art montrent cependant qu'il n'existe pas de telles techniques qui résistent à toutes les attaques sur l'image ('A print and scan optimized watermarking scheme', F. Lefèbvre, D. Guéluy, D. Delannay and B. Macq, IEEE Multimedia Signal Processing, 2001).

En particulier, la plupart des approches actuelles basées sur le digital watermarking restent sensibles à des attaques résultant d'une combinaison de plusieurs types de détérioration ('Perceptual quality évaluation of geometrically distorsed images using relevant geometric transformation modeling', I. Setyawan, D. Delannay, B. Macq, R.L. Lagendijk, Proceedings of SPIE, Security and Watermarking of Multimedia Contents V, Vol 5020, 2003).

En définitive, même si des solutions dites de 2éme génération sont proposées dans la littérature pour contrer ces attaques, le digital watermarking ne constitue pas encore aujourd'hui une solution fiable à 100% permettant la relecture de la marque sur une image ayant subit des attaques (Watermarking Digital Image and Video Data, GC Langelaar, I. Setyawan, RL Lagendijk, IEEE Signal Processing Magazine", septembre 2000, volume 17-5, pages 20-46). Même si l'attaque que peut subir une carte est difficilement caractérisable, il est certain qu'elle combine les attaques connus « print / scan », « géométriques » et autres dont la résultante est clairement dénoncée par la communauté scientifique comme fragile.

En outre, la vérification après lecture des informations de sécurisation physique cachées nécessite bien souvent l'accès à une base de données, ce qui engendre des difficultés de stockage de ces données, de sécurisation des données stockées et, tout simplement, d'accès à ces données.

Le document US 2003/210802 decrit un procédé de sécurisation d'un object portatif personnel conforme à l'objet du préambule de la revendication 1.

Compte tenu de ce qui précède, un problème que se propose de résoudre l'invention est de réaliser un procédé de sécurisation d'un objet portatif personnel, qui pallie aux inconvénients précités de l'état de l'art, ne nécessitant pas forcément l'ajout d'un élément physique sur le corps de carte, qui montre une robustesse accrue par rapport à la technique classique du digital watermarking et qui ne requiert pas d'accès à une base de données pour la vérification de l'élément sécurisé.

La solution de l'invention à ce problème posé a pour premier objet, un procédé de sécurisation d'un objet portatif personnel selon la revendication 1.

Cette comparaison permet de s'assurer de l'existence d'un lien sécurisé entre la puce électronique et l'impression d'image et ainsi de confirmer la validité de l'ensemble corps d'objet/puce. En outre, la manière de protéger les informations par les procédés de cryptage traditionnels, la sécurité du corps de cartes est essentiellement garantie par l'utilisation astucieuse du signal numérique de l'image d'identité sans l'ajout d'aucun élément physique ou logiciel sur le corps de cartes (Hologramme, watermarking...).

De ce fait, les possibilités de fraudes soit sur le corps d'objet, soit sur l'échange de la puce, sont considérablement limitées.

Elle a pour second objet, un objet portatif personnel selon la revendication 12. L'invention sera mieux comprise à la lecture de la description non limitative qui va suivre, rédigée au regard des dessins annexés, dans lesquels :
les figures 1A et 1B montrent, respectivement en vue de dessus et en coupe transversale, un mode de réalisation de carte selon l'invention ;
la figure 2 illustre les étapes de génération du vecteur de caractéristiques images Vsi (num) et de la clé S, et leur stockage dans la puce, selon le procédé de l'invention ;
la figure 3 illustre les étapes de génération du vecteur de caractéristiques images Vsi (dig), selon le procédé de l'invention ; et
la figure 4 illustre les étapes de comparaison des vecteurs de caractéristiques images Vsi (num) et Vsi(dig), selon le procédé de l'invention.

Dans la présente description, les termes fichier d'image, séquence pseudo aléatoire, algorithme, algorithme d'insertion, clé secrète S, puce électronique, signal de l'impression d'image et appareil de capture du signal de l'impression d'image sont définis comme ci-après.

Par fichier image, on entend tout fichier d'image numérique composé d'unités élémentaires (pixels) qui représentent chacun une portion de l'image. L'image numérique peut être composée de X x Y pixels, X et Y pouvant varier de 256 unités à 1024 unités. La dynamique de l'image numérique peut être composée de teintes de gris différents ou de couleurs.

Par séquence pseudo aléatoire , on entend une suite de nombres entiers x0, x1, x2,... prenant des valeurs quelconques dans un ensemble tels que M = {0, 1, 2, ..., m-1} ou M = {-1, 0, 1} ...

Par algorithme, on entend un procédé automatique dont l'objet est de transformer une information en une autre information. On schématise cette transformation en disant qu'une donnée d'entrée est modifiée via un algorithme en une donnée de sortie, appelée également « résultat ».

Par algorithme d'insertion, on entend un algorithme capable de calculer un certain nombre d'informations suivant un protocole défini et les stocker dans un support ou périphérique suivant aussi un protocole dédié.

Par clé secrète S, on entend une clé unique à chaque puce, qui a pour fonction l'identification d'un vecteur de caractéristiques images Vsi (num), et d'une signature de l'image d'identité dépendant de Vsi (num) et d'un algorithme de calcul secret. Elle sert d'entrée à l'algorithme de relecture qui assure une fonction de sécurité pour la phase de relecture. Sans la connaissance de la clé et donc, sans la puce d'origine, il est impossible d'accéder aux informations qui vont permettre de valider le support selon l'invention.

Par puce électronique, on entend un circuit électronique réalisé à la surface d'une plaquette de matériau semi-conducteur, qui réunit tous les éléments nécessaires pour remplir une fonction déterminée. Ce terme désigne spécifiquement la plaquette de matériau semi-conducteur à partir de laquelle est fabriqué le circuit intégré. Par extension de sens, le terme puce peut aussi désigner le circuit intégré lui-même.

Par signal de l'impression d'image, on entend des variations d'une grandeur physique caractéristique de l'image, qui peuvent être enregistrées.

Enfin, par appareil de capture, on entend un scanneur, un caméscope numérique, une caméra de type Webcam ou un appareil photo numérique.

L'objet portatif sécurisé selon l'invention est une carte à puce ou tout autre objet portatif sécurisé intégrant une puce électronique. Il peut notamment s'agir d'un passeport sécurisé ou d'un visa électronique.

Dans le cas d'une carte à puce, la carte peut être à contacts, sans contact, hybride ou dite dual interface.

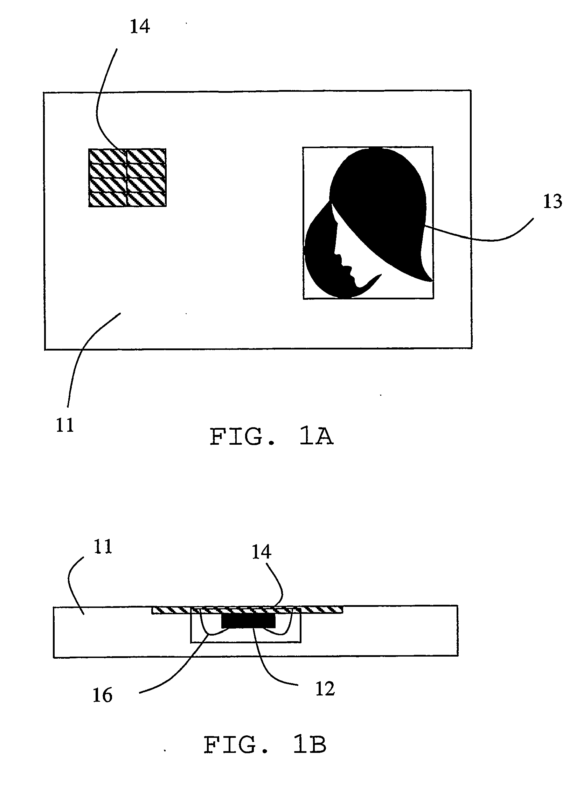

Les figures 1A et 1B se réfèrent à une carte à puce à contacts. Cette carte comporte un corps de carte 11, une puce électronique 12, une impression d'image 13 ainsi que des moyens pour permettre une communication de ladite carte avec le monde extérieur, ces moyens étant formés par un ensemble de plages de contact 14.

Le corps de carte est formé d'une pluralité de feuilles thermoplastiques assemblées par laminage à chaud. Ces dimensions sont définies par la norme ISO 7810. Elles sont de 86 mm de longueur, 54 mm le largeur et 0,76 mm d'épaisseur.

La puce 12 est notamment un microcontrôleur muni de mémoires volatiles (RAM) et non volatiles du type EEPROM. Elle peut contenir, pour certaines applications sécuritaires, un crypto processeur associé. Cette puce 12 comporte des plots, ces plots étant connectés aux plages de contact 14 de la carte, par des fils conducteurs 16 (wire bonding) dans l'exemple des figures 1A et 1B. Elle est en outre enrobée d'une résine protectrice, l'ensemble puce 12, fils conducteurs 16, résine protectrice et plages conductrices 14 formant un micromodule incorporé dans une cavité du corps de carte 11.

L'impression d'image 13 est constituée de données visibles du corps d'objet, caractéristiques du titulaire dudit objet.

De préférence, l'impression d'image 13 est formée par une photographie visible en couleur ou en noir et blanc du titulaire de la carte.

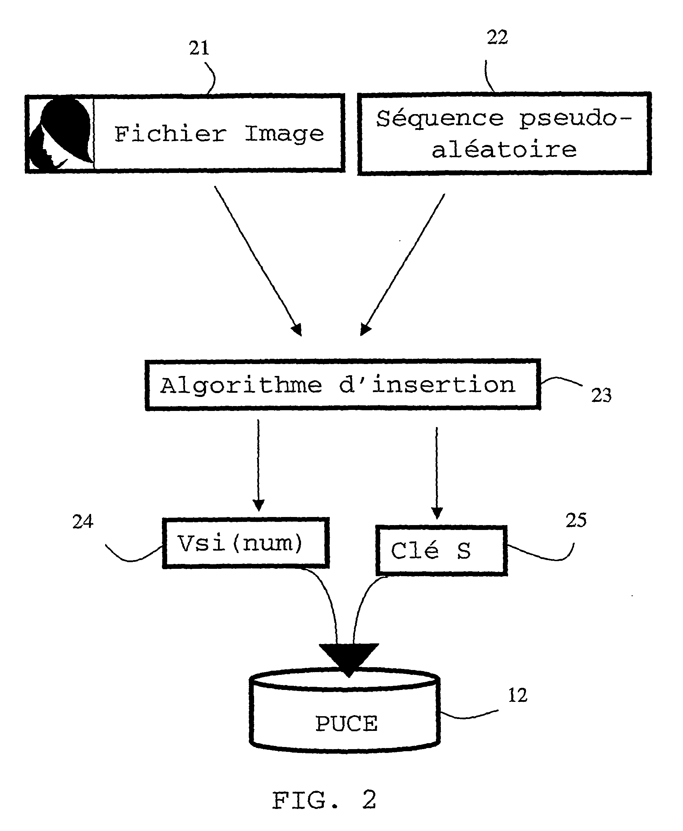

La figure 2 illustre une première étape du procédé selon l'invention. Il s'agit de l'étape de génération, à partir d'un fichier image 21, d'une séquence pseudo aléatoire 22 et d'un algorithme d'insertion 23, d'un vecteur de caractéristiques images Vsi (num) 24 et d'une clé secrète S 25 destinés à être stockés dans une mémoire de la puce électronique 12 ou d'une autre puce de l'objet.

De préférence, le vecteur de caractéristiques images Vsi (num) 24 et la clé secrète S 25 sont stockés dans une mémoire de la puce électronique 12.

La mise en oeuvre de cette première étape ne nécessite aucune modification des lignes de production des cartes, dans le sens où les informations, qui vont être stockées dans la puce 12, sont extraites et analysées directement du fichier image 21 qui va servir à l'impression de l'image 13 sur le corps de carte 11.

Si l'on considère une carte à puce à contact personnalisée, munie de la photographie de son titulaire, cette photographie étant une photographie d'identité couleur de taille 512 x 512 pixels codée sur 24 bits (8 bits par voie). Soit maintenant une partition multi niveaux de l'image en blocs de taille k₁ x k₂, où k₁ et k₂ sont des diviseurs de 512. Considérons k₁ = k₂ et six niveaux de partition en blocs juxtaposés à savoir, 32 x 32 blocs ou sous-images de 16 x 16 pixels et 16 x 16 blocs de sous-images de 32 x 32 pixels et 8 x 8 blocs de 64 x 64 pixels, 4 x 4 blocs de 128 x 128, 2 x 2 blocs de 256 x 256, 1 bloc de 512 x 512. La réunion de toutes ces sous-images forme donc un sous-ensemble de 1365 images (1 + 4 + 16 + 64 + 256 + 1024). Chaque sous-image est codée par un index représentant le niveau de partition (le bloc de 512 x 512 pixels représente le niveau 0) et un deuxième caractérisant sa position dans son niveau de partition. Pour chaque niveau i de partition, kᵢ représentants d'origines variées (composantes spatiales, fréquentielles, géométriques) sélectionnés pour leur stabilité face au vieillissement de la photo et leurs capacités de différentiation) de ses sous-images sont extractibles, kᵢⱼ symbolisant donc la composante numéro j pour le niveau de partition i.

La clé secrète S générée par la séquence pseudo aléatoire va permettre à la fois de sélectionner parmi les 1361 images un nombre de k_{b} blocs actifs et pour chaque bloc actif kᵢₛ le nombre de caractéristiques actives pour la validation future du support. Pour simplifier l'ensemble, on considère toutefois qu'à chaque niveau de partition correspond un sous-ensemble de caractéristiques dédiées.

Considérons pour illustrer k_{b} = 500, kᵢ = 10 et kᵢₛ = 5.

Il existe 1365 ! / (865 ! x 500 !) manières de choisir 500 images parmi 1361. Les 1361 premiers bits de la clé secrète S vont représenter la sélection des blocs.

Il existe 10 ! / (5 ! x 5 !) = 252 manières différentes de choisir 5 éléments parmi 10. Les 24 bits suivants vont être utilisés pour la sélection des caractéristiques, 4 bits étant suffisants pour coder le sous-ensemble de caractéristiques actives par niveau de partition.

Les derniers 64 bits de la clé secrète S sont réservés à l'inscription d'une caractéristique particulière signature de la partition réalisée. Cette signature est obtenue par un algorithme d'insertion combinant une information de chaque bloc sélectionné de niveaux 5 et 6.

Lors de la phase d'insertion, la clé S est générée ainsi que les caractéristiques des images actives pour être stockées dans la puce. Parmi les images actives sélectionnées, celles ne présentant pas des caractéristiques suffisantes (trop peu d'information dans le signal) seront automatiquement invalidées. Dans la mesure du possible, elles seront remplacées par des blocs valides. La même approche est utilisée pour les caractéristiques. Si l'une des caractéristiques qui est sélectionnée présente une efficience trop éloignée d'une caractéristique non sélectionnée par rapport au signal image en présence, elle sera invalidée et remplacée.

La séquence pseudo aléatoire 22 a pour fonctions de notifier le sous-ensemble de caractéristiques qui composent le vecteur de caractéristiques images Vsi (num) 24 et de générer une partie de la clé secrète S 25 (donc, indirectement, la signature de l'image dépendant de la partition). De façon avantageuse, la partition de l'image en sous-images permet de considérer des caractéristiques représentant l'image de base à plusieurs niveaux de finesse et dans toutes ses parties, sans avoir à mémoriser l'image entière du fichier numérique dans la puce.

Cette partition de l'image en sous-images permet également d'affiner la décision ou non de validité du support. Cette dernière est basée sur la combinaison de kb images, la partition de l'image en sous-images amène de la redondance décisionnelle, et permet notamment de filtrer la présence de défauts locaux (saletés, rayures, ...) toutefois acceptables car correspondant à du vieillissement.

En outre, cette partition de l'image en sous-images offre l'avantage d'introduire une sécurité complémentaire sans avoir à rajouter de l'information comme pour les techniques de watermarking. En effet, si l'on peut imaginer qu'il existe une infime chance de pouvoir falsifier globalement une photo d'identité fraudée pour que ses caractéristiques s'apparentent avec celles de la puce provenant du fichier numérique de la photo originale, une falsification sur les kb images est invraisemblable.

De plus, cette partition de l'image en sous-images permet de s'assurer de la conformité de la clé secrète S. En effet, à une partition donnée correspond une signature de l'image calculée suivant un algorithme secret donc le couple signature / partition est copiable qu'en connaissant à la fois l'algorithme et la partition.

Les principales étapes de l'insertion sont : la lecture du fichier numérique, le traitement de l'image, le cryptage de S et de Vsi (num) et le stockage dans la puce.

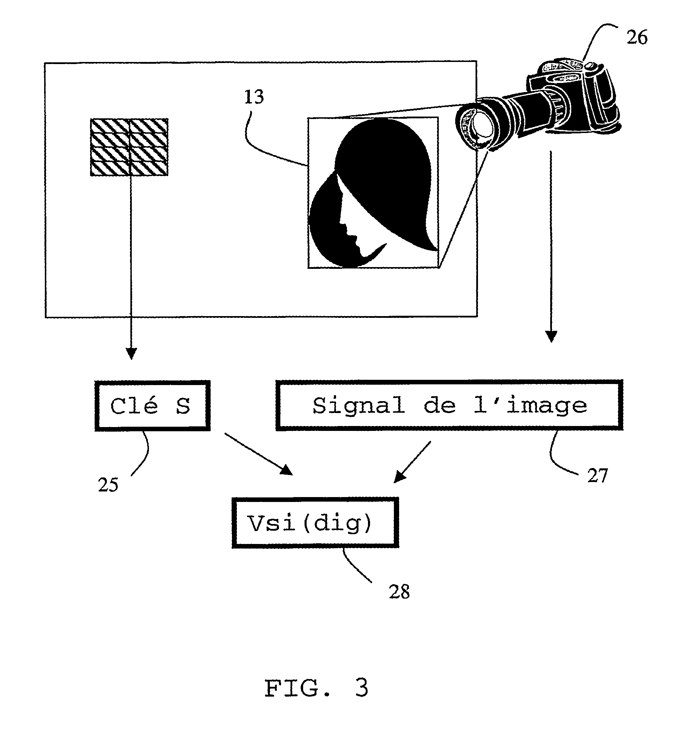

La figure 3 illustre une seconde étape selon l'invention. Il s'agit de l'étape de génération, à partir d'un signal de l'impression d'image 27 capturée par un appareil de capture 26 et de la clé secrète S 25 extraite de la puce électronique 12, d'un vecteur de caractéristiques images Vsi(dig) 28.

Lors de cette étape de génération du vecteur de caractéristiques Vsi (dig) 28, le logiciel sur l'ordinateur hôte (« host ») permet la capture de l'image de la photo d'identité et son prétraitement, pour être utilisable dans la dernière étape de comparaison.

De façon avantageuse, l'impression d'image 27 est issue du fichier image 21.

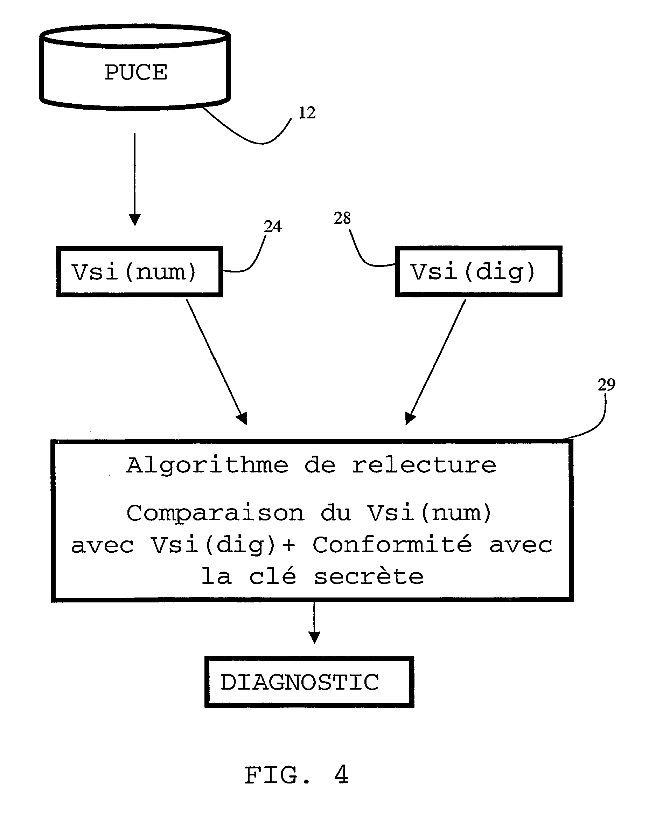

Enfin, la figure 4 illustre une troisième étape selon l'invention. Il s'agit de la comparaison, par un algorithme de relecture 29, des vecteurs de caractéristiques images Vsi (num) 24 et Vsi(dig) 28. Cette comparaison permet ou non de confirmer la validité du support et ainsi de s'assurer qu'il existe effectivement un lien sécurisé entre le signal d'impression d'image 27 et les informations contenues dans la mémoire de la puce électronique 12 issues du fichier image 21.

Lors de cette étape de comparaison, le logiciel sur l'ordinateur hôte permet l'interrogation de la puce pour extraire la clé secrète S et son décryptage. Le logiciel sur l'ordinateur hôte permet en outre l'extraction successive des caractéristiques des k_{b} images telles que définies plus haut, selon un ordre généré de manière aléatoire (décodable par l'ordinateur hôte). Ainsi, le transit des informations entre la puce et l'ordinateur hôte sera difficilement interprétable car à chaque test du support correspondra un ordre différent.

De plus, le logiciel sur l'ordinateur hôte permet le décryptage des données de la puce, le calcul des caractéristiques de l'image capturée suivant le schéma énoncé par la clé secrète S, ainsi que la comparaison (« matching ») des informations par niveau. Ceci conduit à une décision quant à la validité ou non du support de carte. Les seuils d'acceptation sur les différences entre Vsi (num) et Vsi (dig) sont élaborés par des tests d'hypothèses statistiques.

Une procédure de recalage local de l'image scannée est intégrée pour parer d'éventuels problèmes de synchronisation de l'image.

Selon l'invention, l'algorithme de relecture 29 génère une information binaire sur la validité de l'objet portatif en comparant le vecteur de caractéristique images Vsi (num) 24 extrait de la puce par la connaissance de la clé S et le vecteur de caractéristique images Vsi (dig) 28, directement calculé sur le signal récupéré par la capture de l'image.

Dans un premier mode de réalisation, l'algorithme de relecture 29 est dissocié de la puce électronique 12.

Dans un deuxième mode de réalisation, l'algorithme de relecture 29 est partiellement intégré dans la puce électronique 12.

La clé S est unique à une puce électronique. Aussi, la méthode d'extraction de l'information de l'image et la méthode de comparaison de la distance entre ledit vecteur de caractéristique images Vsi(num) 24 et ledit vecteur de caractéristique images Vsi (dig) 28 directement calculé sur le signal récupéré par la capture de l'image, sont différents d'un support à l'autre.

En évitant le recours à des bases de données, cette comparaison d'information entre deux éléments du support de carte limite donc également les problèmes de sécurisation des données.

En outre, L'idée d'utiliser une clé secrète a un double intérêt. Elle permet de réduire le stockage d'informations dans la puce car on sélectionne à la fois un sous-ensemble d'images et un sous-ensemble de caractéristiques. Elle permet également de limiter le risque de fraude en rendant unique le processus de lecture et de comparaison (« matching ») des informations d'une puce à l'autre.

Selon l'invention, la clé secrète S 25 guide le processus de comparaison des deux vecteurs de caractéristiques Vsi(num) 24 et Vsi(dig) 28.

La clé secrète S 25 a donc un rôle sécuritaire double. Tout d'abord, elle indique à l'algorithme de relecture 29 quel est le sous-ensemble de caractéristiques images présélectionnées par l'algorithme d'insertion 23. De plus, elle définit le vecteur de caractéristiques images Vsi(num) 24 qui sert de base à la comparaison des informations. Son authenticité est assurée grâce une signature de l'image numérique dépendant du sous ensemble d'images sélectionnées.

En définitive, l'invention concerne un lien sécurisé entre un signal d'impression d'image 27 et les informations contenues dans la mémoire de la puce électronique 12 extraites du fichier numérique 21. Ce lien offre les avantages suivants :
- il permet d'éviter d'avoir recours à des bases de données engendrant des problèmes de sécurisation de stockage et d'accès aux bases de données ;
- sa mise en oeuvre industrielle n'engendre pas de modifications de process ou d'équipements sur les lignes de production et plus particulièrement de personnalisation des cartes à puce, aussi bien des étapes de personnalisation software des puces que des étapes de personnalisation hardware du corps de carte (impression et protection impression par dépose vernis ou patch) ;
- il est tel qu'un changement de l'impression d'image 13 ou de la puce électronique 12 est détectable de manière infaillible par le système de reconnaissance et déclare le support invalide ;
- il est tel que dans le cas de la présence de la puce électronique 12 et de l'impression d'image 13 native même vieillie, le système de reconnaissance confirme la validité du support ; et
- il est sécurisé dans le sens où les seules données de l'image ne permettent pas de valider le lien entre l'entité physique et l'information contenue dans la puce.

Une première alternative se situe au niveau de la partition de l'image.

Dans un premier mode de réalisation, la partition de l'image peut être caractérisé de statique car elle est la même quel que soit l'image (par multiple de 2).

Dans un second mode de réalisation, une approche de partition dynamique est envisageable, ayant pour avantage de découper l'image de manière adaptative. Ce mode de réalisation permet un meilleur équilibre de la quantité d'informations contenues dans les sous-images appartenant au même niveau de partition, ainsi qu'une unicité de partition, rendant plus difficile la compréhension du processus pour un éventuel fraudeur.

Une deuxième alternative se situe au niveau du logiciel de relecture.

Selon un premier mode de réalisation, le procédé selon l'invention comporte une étape d'extraction des informations de la puce en vue d'un traitement au niveau du l'ordinateur hôte.

Selon un deuxième mode de réalisation, l'ordinateur hôte calcule directement les caractéristiques de l'image capturée et laisse la puce faire la comparaison des informations. Ceci a pour but d'éviter l'extraction d'information de cette dernière.

Une troisième alternative se situe au niveau du stockage de la clé secrète S et du vecteur de caractéristique Vsi (num) dans la puce. Une compression / cryptage de la clé secrète S et du vecteur de caractéristique Vsi(num) est envisageable, permettant ainsi de minimiser la quantité mémoire.

## Revendications

1. Procédé de sécurisation d'un objet portatif personnel comportant un corps d'objet (11), une puce électronique (12), une impression d'image (13) et des moyens pour permettre une communication dudit objet avec le monde extérieur, comportant des étapes de :
- génération, à partir d'un fichier image (21) et d'un algorithme d'insertion (23), d'un vecteur de caractéristiques images Vsi (num) (24) stocké dans la puce électronique (12) ;
- génération, à partir d'un signal de l'impression d'image (27) capturé par un appareil de capture (26), d'un vecteur de caractéristiques images Vsi (dig) (28); et de
- comparaison, par un algorithme de relecture (29), des vecteurs de caractéristiques images Vsi(num) (24) et Vsi(dig) (28)
**caractérisé en ce que** ledit fichier image est divisé en sous-image de différents niveaux de finesse et **en ce que** ledit algorithme d'insertion (23) est basé sur des sous-images de différents niveaux de finesse.

2. Procédé, selon la revendication 1, **caractérisé en ce que** l'étape de génération du vecteur de caractéristiques images Vsi(num) est une étape de génération, à partir d'un fichier image (21), d'une séquence pseudo-aléatoire (22) et d'un algorithme d'insertion (23), d'un vecteur de caractéristiques images Vsi(num) (24) et d'une clé secrète S (25), stockés dans la puce électronique (12) ; et **en ce que** l'étape de génération du vecteur de caractéristiques images Vsi(dig) est une étape de génération, à partir d'un signal de l'impression d'image (27) capturé par un appareil de capture (26) et de ladite clé secrète S (25), d'un vecteur de caractéristiques images Vsi(dig) (28).

3. Procédé selon l'une des revendications 1 ou 2, **caractérisé en ce que** l'impression d'image (27) est issue du fichier image (21).

4. Procédé selon l'une des revendications 1 à 3, **caractérisé en ce que** l'objet portatif personnel est sécurisé par un lien sécurisé entre un signal d'impression d'image (27) et les informations contenues dans la mémoire de la puce électronique (12) issues du fichier image (21).

5. Procédé selon l'une des revendications 1 à 4, **caractérisé en ce que** l'algorithme de relecture (29)est dissocié de la puce électronique (12).

6. Procédé selon l'une des revendications 1 à 5, **caractérisé en ce que** l'algorithme de relecture (29) est partiellement intégré dans la puce électronique (12).

7. Procédé selon l'une des revendications 1 à 6, **caractérisé en ce que** l'impression d'image (13) est constituée de données visibles du corps d'objet, caractéristiques du titulaire dudit objet.

8. Procédé selon la revendication 7, **caractérisé en ce que** l'impression d'image (13) est formée par une photographie visible en couleur ou en noir et blanc du titulaire de la carte.

9. Procédé selon l'une des revendications 1 à 8, **caractérisé en ce que** l'appareil de capture du signal de l'impression d'image (13) est un scanner, un caméscope numérique, une caméra de type Webcam ou un appareil photo numérique.

10. Procédé selon l'une des revendications 1 à 9, **caractérisé en ce que** le vecteur de caractéristiques images Vsi(num) et la clé secrète S sont enregistrées dans une mémoire de la puce électronique (12) ou d'une autre puce de l'objet.

11. Procédé selon l'une des revendications 1 à 10, **caractérisé en ce que** le vecteur de caractéristiques images Vsi(num) et la clé secrète S sont enregistrées dans une mémoire de la puce électronique (12).

12. Objet portatif personnel comportant un corps d'objet (11), une puce électronique (12), une impression d'image (13) et des moyens pour permettre une communication dudit objet avec le monde extérieur, ledit objet comportant en outre un vecteur de caractéristiques images Vsi(num) (24) généré à partir d'un fichier image (21) et d'un algorithme d'insertion (23),
**caractérisé en ce que** le dit fichier image est divisé en sous-images de différents niveaux de finesse et **en ce que** ledit algorithme d'insertion (23) est basé sur des sous-images de différents niveaux de finesse.

13. Objet portatif personnel selon la revendication 12, **caractérisé en ce qu'**il comporte en outre une clé secrète S (25) générée à partir d'un fichier image (21), d'une séquence pseudo aléatoire (22) et d'un algorithme d'insertion (23).

14. Objet portatif personnel selon l'une des revendications 12 ou 13, **caractérisé en ce que** des bits de la clé secrète S (25) représentent une sélection de blocs de sous-images ; d'autres bits de ladite clé sont utilisés pour la sélection des caractéristiques ; et d'autres bits sont réservés à l'inscription d'une signature obtenue par un algorithme d'insertion combinant une information de chaque bloc de sous-images sélectionnée de niveaux n et n-1, avec n compris entre 3 et 6 inclus.

15. Objet portatif personnel selon l'une des revendications 12 à 14, **caractérisé en ce qu'**il est une carte à puce.

## Patentansprüche

1. Verfahren zur Sicherung eines tragbaren persönlichen Gegenstandes, der aus einem Objektkörper (11), einem Mikrochip (12), einem Bilddruck (13) und Mitteln besteht, mit denen eine Kommunikation des besagten Gegenstands mit der Außenwelt möglich ist, wobei das Verfahren folgende Schritte umfasst:
- ausgehend von einer Bilddatei (21) und eines Einfüge-Algorithmus (23) Erzeugung eines Vektors der auf dem Mikrochip (12) gespeicherten Bildmerkmale Vsi(num) (24);
- ausgehend von einem Signal des Bilddrucks (27), das mit einem Erfassungsgerät (26) aufgenommen wird, Erzeugung eines Vektors der Bildmerkmale Vsi(dig) (28); und
- durch einen Wiedergabe-Algorithmus (29) Vergleich der Vektoren der Bildmerkmale Vsi(num) (24) und Vsi(dig) (28),
**dadurch gekennzeichnet, dass** die besagte Bilddatei in Einzelbilder mit verschiedenen Feinheitsgraden aufgeteilt ist und der besagte Einfüge-Algorithmus (23) auf den Einzelbildern mit verschiedenen Feinheitsgraden basiert.

2. Verfahren nach Anspruch 1, **dadurch gekennzeichnet, dass** beim Schritt zur Erzeugung des Vektors der Bildmerkmale Vsi(num) aus einer Bilddatei (21), einer Pseudozufallsfolge (22) und einem Einfüge-Algorithmus (23) ein Vektor der Bildmerkmale Vsi(num) (24) und ein im Mikrochip (12) gespeicherter Geheimschlüssel S (25) erzeugt wird und dass beim Schritt zur Erzeugung des Vektors der Bildmerkmale Vsi(dig) aus einem Signal des Bilddrucks (27), das mit einem Erfassungsgerät (26) aufgenommen wird, und dem besagten Geheimschlüssel S (25) ein Vektor der Bildmerkmale Vsi(dig) (28) erzeugt wird.

3. Verfahren nach einem der Ansprüche 1 oder 2, **dadurch gekennzeichnet, dass** der Bilddruck (27) aus der Bilddatei (21) stammt.

4. Verfahren nach einem der Ansprüche 1 bis 3, **dadurch gekennzeichnet, dass** der tragbare persönliche Gegenstand durch eine gesicherte Verbindung zwischen einem Bilddrucksignal (27) und den im Speicher des Mikrochips (12) enthaltenen Informationen, welche aus der Bilddatei (21) stammen, gesichert wird.

5. Verfahren nach einem der Ansprüche 1 bis 4, **dadurch gekennzeichnet, dass** der Wiedergabe-Algorithmus (29) nicht mit dem Mikrochip (12) verbunden ist.

6. Verfahren nach einem der Ansprüche 1 bis 5, **dadurch gekennzeichnet, dass** der Wiedergabe-Algorithmus (29) teilweise in den Mikrochip (12) integriert ist.

7. Verfahren nach einem der Ansprüche 1 bis 6, **dadurch gekennzeichnet, dass** der Bilddruck (13) aus sichtbaren Daten des Objektkörpers besteht, die Merkmale des Inhabers des besagten Gegenstands sind.

8. Verfahren nach Anspruch 7, **dadurch gekennzeichnet, dass** der Bilddruck (13) aus einem sichtbaren Farb- oder Schwarz-Weiß-Foto des Karteninhabers gebildet wird.

9. Verfahren nach einem der Ansprüche 1 bis 8, **dadurch gekennzeichnet, dass** das Gerät zur Erfassung des Signals des Bilddrucks (13) ein Scanner, ein Digital-Camcorder, eine Kamera vom Typ Webcam oder ein digitaler Fotoapparat ist.

10. Verfahren nach einem der Ansprüche 1 bis 9, **dadurch gekennzeichnet, dass** der Vektor der Bildmerkmale Vsi(num) und der Geheimschlüssel S in einem Speicher des Mikrochips (12) oder einem anderen Chip des Gegenstands gespeichert sind.

11. Verfahren nach einem der Ansprüche 1 bis 10, **dadurch gekennzeichnet, dass** der Vektor der Bildmerkmale Vsi(num) und der Geheimschlüssel S in einem Speicher des Mikrochips (12) gespeichert sind.

12. Tragbarer persönlicher Gegenstand, der aus einem Objektkörper (11), einem Mikrochip (12) einem Bilddruck (13) und Mitteln besteht, mit denen eine Kommunikation des besagten Gegenstands mit der Außenwelt möglich ist, wobei der besagte Gegenstand zudem einen Vektor der Bildmerkmale Vsi(num) (24) enthält, der aus einer Bilddatei (21) und einem Einfüge-Algorithmus (23) erzeugt wird, **dadurch gekennzeichnet, dass** die besagte Bilddatei in Einzelbilder mit verschiedenen Feinheitsgraden aufgeteilt ist und dass der besagte Einfüge-Algorithmus (23) auf den Einzelbildern mit verschiedenen Feinheitsgraden basiert.

13. Tragbarer persönlicher Gegenstand nach Anspruch 12, **dadurch gekennzeichnet, dass** er außerdem einen Geheimschlüssel S (25) enthält, der aus einer Bilddatei (21), einer Pseudozufallsfolge (22) und einem Einfüge-Algorithmus (23) erzeugt wird.

14. Tragbarer persönlicher Gegenstand nach einem der Ansprüche 12 oder 13, **dadurch gekennzeichnet, dass** die Bits des Geheimschlüssels S (25) eine Auswahl an Einzelbilderblöcken darstellen; andere Bits des besagten Schlüssels für die Auswahl der Merkmale verwendet werden und andere Bits für die Eintragung einer Unterschrift vorbehalten sind, die durch einen Einfüge-Algorithmus erhalten werden, der eine Information von jedem gewählten Block an Einzelbildern mit einem Grad n und n-1 mit n zwischen 3 und 6 kombiniert.

15. Tragbarer persönlicher Gegenstand nach einem der Ansprüche 12 bis 14, **dadurch gekennzeichnet, dass** es sich um eine Chipkarte handelt.

## Claims

1. A process for securing a personal portable object comprising an object body (11), a microchip (12), a printed image (13) and means to allow said object to communicate with the outside, comprising the following steps:
- generation, from an image file (21) and an insertion algorithm (23), of an image feature vector Vsi(num) (24) stored in the microchip (12);
- generation, from a printed image signal (27) captured by a capturing device (26), of an image feature vector Vsi(dig) (28); and
- comparison, by a read-back algorithm (29), of the image feature vectors Vsi(num) (24) and Vsi(dig) (28)
**characterised in that** said image file is divided into sub-images with different fineness levels and **in that** said insertion algorithm (23) is based on sub-images with different fineness levels.

2. A process according to claim 1, **characterised in that** the step of generating the image feature vector Vsi(num) is a step of generation, from an image file (21), a pseudo-random sequence (22) and an insertion algorithm (23), of an image feature vector Vsi(num) (24) and a secret key S (25) stored in the microchip (12), and **in that** the step of generating the image feature vector Vsi (dig) is a step of generation, from the printed image signal (27) captured by a capturing device (26) and said secret key S (25), of an image feature vector Vsi(dig) (28) .

3. A process according to any of claims 1 or 2, **characterised in that** said printed image (27) is derived from the image file (21).

4. A process according to any of claims 1 to 3, **characterised in that** the personal portable object is made secure by a secure link between a printed image signal (27) and the information contained in the memory of the microchip (12) derived from the image file (21).

5. A process according to any of claims 1 to 4, **characterised in that** the read-back algorithm (29) is separated from the microchip (12).

6. A process according to any of claims 1 to 5, **characterised in that** the read-back algorithm (29) is partly integrated into the microchip (12).

7. A process according to any of claims 1 to 6, **characterised in that** said printed image (13) is made up of visible data of the object body, characteristic of the holder of said object.

8. A process according to claim 7, **characterised in that** the printed image (13) is formed of a visible colour or black and white photograph of the holder of said object.

9. A process according to any of claims 1 to 8, **characterised in that** the device (13) that captures the printed image signal is a scanner, a digital camcorder, a webcam type camera or a digital camera.

10. A process according to claims 1 to 9, **characterised in that** the image feature vector Vsi(num) and the secret key S are saved in a memory of the microchip (12) or of another chip of the object.

11. A process according to claims 1 to 10, **characterised in that** the image feature vector Vsi(num) and the secret key S are saved in a memory of the microchip (12).

12. A personal portable object comprising an object body (11), a microchip (12), a printed image (13) and means to enable said object to communicate with the outside, wherein said object further comprises an image feature vector Vsi(num) (24) generated from an image file (21) and an insertion algorithm (23), **characterised in that** said image file is divided into sub-images with different levels of fineness and **in that** said insertion algorithm (23) is based on sub-images with different fineness levels.

13. A personal portable object according to claim 12, **characterised in that** it further comprises a secret key S (25) generated from an image file (21), a pseudo random sequence (22) and an insertion algorithm (23).

14. A personal portable object according to any of claims 12 or 13, **characterised in that** some bits of the secret key S (25) represent a selection of blocks of sub-images; other bits of said key are used for selecting features and other bits are set aside for the entry of a signature obtained by an insertion algorithm combining one selected piece of information of each block of sub-images at levels N and n-1, with n ranging between 3 and 6 inclusive.

15. A personal portable object according to any of claims 12 to 14, **characterised in that** it is a smart card.
